(19) **Europäisches Patentamt**
**European Patent Office**
**Office européen des brevets**

(11) **EP 2 784 777 A1**

(12) **EUROPEAN PATENT APPLICATION**
published in accordance with Art. 153(4) EPC

(43) Date of publication:
**01.10.2014 Bulletin 2014/40**

(21) Application number: **11876150.1**

(22) Date of filing: **22.11.2011**

(51) Int Cl.:
*G10L 19/04* (2013.01)   *H04B 1/10* (2006.01)
*H04B 1/16* (2006.01)

(86) International application number:
**PCT/JP2011/076854**

(87) International publication number:
**WO 2013/076801 (30.05.2013 Gazette 2013/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Pioneer Corporation**
**Kawasaki-shi, Kanagawa 212-0031 (JP)**

(72) Inventors:
• **TAKAYA, Hironori**
  **Kawagoe-shi**
  **Saitama 350-8555 (JP)**

• **WATANABE, Kaoru**
  **Kawagoe-shi**
  **Saitama 350-8555 (JP)**

(74) Representative: **Grünecker, Kinkeldey, Stockmair & Schwanhäusser**
**Leopoldstrasse 4**
**80802 München (DE)**

(54) **AUDIO SIGNAL CORRECTION DEVICE AND METHOD FOR CORRECTING AUDIO SIGNAL**

(57)    On the basis of a leading audio waveform during a leading audio interval, being earlier than a hiatus interval in which an audio signal DAD is interrupted, and a trailing audio waveform during a trailing audio interval, being subsequent to the hiatus interval, a waveform prediction part 142 calculates a predicted waveform in a waveform prediction interval that successively includes the hiatus interval, a leading overlapping interval that overlaps the leading audio interval, and a trailing overlapping interval that overlaps the trailing audio interval. On the basis of the leading audio waveform, trailing audio waveform, and predicted waveform, an audio output signal generation part 143 generates an audio output signal AOD having a waveform obtained by weighted averaging of the waveforms of the audio signal DAD and the predicted waveform during the leading overlapping interval and during the trailing overlapping interval, and having the predicted waveform during an intermediate interval between the leading and the trailing overlapping intervals. As a result, it is possible to generate an audio output signal that can minimize any feeling of discontinuity for the listener.

Fig. 3

**Description**

TECHNICAL FIELD

The present invention relates to an audio signal correction device, to an audio signal correction method and to an audio signal correction program, and to a recording medium upon which the audio signal correction program is recorded.

BACKGROUND ART

For the past, broadcast reception devices that are mounted to moving bodies such as vehicles or the like and that receive broadcast radio waves have been widespread. The evolution of technique related to such broadcast reception devices has been remarkable, and a radio data system (RDS) that is employed in Europe, for example, which has been implemented in practice is an information transmission system that multiplex transmits information corresponding to radio broadcasts using portions of subcarriers of those broadcasts.

With this RDS system, each of the broadcasting stations present in each reception area broadcasts on a frequency multiplexed basis, in the frequency modulated FM audio signal that is the contents of its broadcast program, RDS data including data such as a PS code that specifies the name of the broadcasting station (i.e. the name of the program service), an AF (Alternative Frequencies) code that gives, for each reception area, a list of the frequencies of broadcasting stations that are networked for broadcasting the same program (i.e. an alternative frequency list), a PI code for identifying the program, and so on. Since this RDS data is a collection of code data that specifies various broadcasting stations, accordingly, each time that the RDS data is extracted by demodulating the broadcast wave that arrives at the broadcast reception device (i.e. the arriving radio wave) or the like, so-called network following processing is performed using this extracted RDS data, and accordingly it becomes possible to perform automatic searching for broadcasting stations that can be received, or to perform tuning changeover in order to receive a broadcast wave that can be received at a more satisfactory quality.

If this type of network following processing is performed by a broadcast reception device that only includes a single tuner, then it is necessary temporarily to interrupt the tuning for listening. A technique has been proposed for suppressing discontinuity of the reproduction audio originating in a hiatus in the audio signal for reproduction that is due to this type of temporary interruption in the state of tuning (refer to Patent Document #1, hereinafter referred to as "the prior art example"). With the technique in this prior art example, it is arranged to predict the audio signal for reproduction during a hiatus interval on the basis of the audio signal that has been obtained directly from the tuned broadcast wave during the interval immediately before this hiatus interval.

PRIOR ART DOCUMENTS

PATENT DOCUMENT

Patent Document #1: Japanese Laid-open Patent Publication 2005-269547.

SUMMARY OF THE INVENTION

PROBLEMS TO BE SOLVED BY THE INVENTION

Since, with the technique described in the prior art example described above, the audio signal in the hiatus interval is predicted on the basis of the audio signal directly before the hiatus interval, accordingly no discontinuity occurs in the audio signal for reproduction between the interval before the hiatus interval and the hiatus interval. However, sometimes a discontinuity can occur in the audio signal for reproduction between the hiatus interval and the interval after the hiatus interval, so that, in some cases, an unusual sound can appear in the reproduced audio.

Due to this, a technique has been eagerly anticipated that can generate an audio output signal for audio reproduction that is capable of preventing any feeling of discontinuity on the part of the listener, even if the input audio signal for reproduction is undesirably interrupted due to the network following operation, both during a hiatus interval and during the interval after a hiatus interval. Addressing this requirement is considered as being one of the problems that the present invention is required to solve.

The present invention has been conceived in consideration of the above described circumstances, and its object is to provide an audio signal correction device and an audio signal correction method that generate an audio output signal, and that are capable of preventing any feeling of discontinuity from being experienced by the listener.

MEANS FOR SOLVING THE PROBLEMS

Considered from a first standpoint, the present invention is an audio signal correction device that generates a continuous audio output signal by correcting an input audio signal that includes a hiatus interval, characterized by comprising: a buffer storage part that stores the waveform of said input audio signal until the present time point, over a predetermined time period that is longer than said hiatus interval; a waveform prediction part that calculates a predicted waveform in a waveform prediction interval on the basis of a first waveform in said buffer storage part during a first interval, which is an interval earlier than said hiatus interval, and on the basis of a second waveform in said buffer storage part during a second interval, which is an interval subsequent to said hiatus interval; and an audio output signal generation part that generates said audio output signal during said waveform prediction interval, on the basis of said first waveform, said second waveform, and said predicted waveform that has been calculated; and in that: said waveform prediction interval is an interval that successively includes said hiatus interval, a first overlap interval that overlaps said first interval, and a second overlap interval that overlaps said second interval; and, during said waveform prediction interval, said audio output signal is a signal that has a waveform during said first and second overlap intervals that is obtained by weighted averaging the waveform of said input audio signal and said predicted waveform, and that has said predicted waveform during intervals other than said first and second overlap intervals.

And, considered from a second standpoint, the present invention is an audio signal correction method that is used by an audio signal correction device that comprises a buffer storage part that stores the waveform of an input audio signal over a predetermined time period that is longer than a hiatus interval until the present time point, and that generates a continuous audio output signal by correcting said input audio signal, characterized by comprising: a waveform prediction process of calculating a predicted waveform in a waveform prediction interval on the basis of a first waveform in said buffer storage part during a first interval, which is an interval earlier than said hiatus interval, and on the basis of a second waveform in said buffer storage part during a second interval, which is an interval subsequent to said hiatus interval; and an audio output signal generation process of generating said audio output signal during said waveform prediction interval, on the basis of said first waveform, said second waveform, and said predicted waveform that has been calculated; and in that: said waveform prediction interval is an interval that successively includes said hiatus interval, a first overlap interval that overlaps said first interval, and a second overlap interval that overlaps said second interval: and said audio output signal is a signal that, during said waveform prediction interval, has a waveform during said first and second overlap intervals that is obtained by weighted averaging the waveform of said input audio signal and said predicted waveform, and that has said predicted waveform during intervals other than said first and second overlap intervals.

Moreover, considered from a third standpoint, the present invention is an audio signal correction program, characterized by causing a calculation part to execute an audio signal correction method according to the present invention.

And, considered from a fourth standpoint, the present invention is a recording medium, characterized in that an audio signal correction program according to the present invention is recorded thereupon so as to be readable by a calculation part.

BRIEF DESCRIPTION OF DRAWINGS

Fig.1 is a figure schematically showing the structure of a broadcast reception device that includes an audio signal correction device according to an embodiment of the present invention;
Fig.2 is a figure showing the structure of a reproduction processing unit of Fig.1;
Fig.3 is a figure showing the structure of the audio signal correction device of Fig.1;
Fig.4 is a figure for explanation of intervals corresponding to waveform prediction by a waveform prediction part of Fig.3;
Fig.5 is a figure for explanation of the bit structure of waveform prediction information sent from the waveform prediction part to an audio output signal generation part of Fig.3;
Fig.6 is a figure for explanation of changes over time of weightings during calculation of weighted averages by the audio output signal generation part of Fig.3;
Fig.7 is a flow chart for explanation of waveform prediction processing performed by the waveform prediction part of Fig.3;
Fig.8 is a flow chart for explanation of synchronized output processing performed by the waveform prediction part of Fig.3; and
Fig.9 is a flow chart for explanation of processing performed by the audio output signal generation part of Fig.3 for generating an audio output signal.

EMBODIMENT FOR CARRYING OUT THE INVENTION

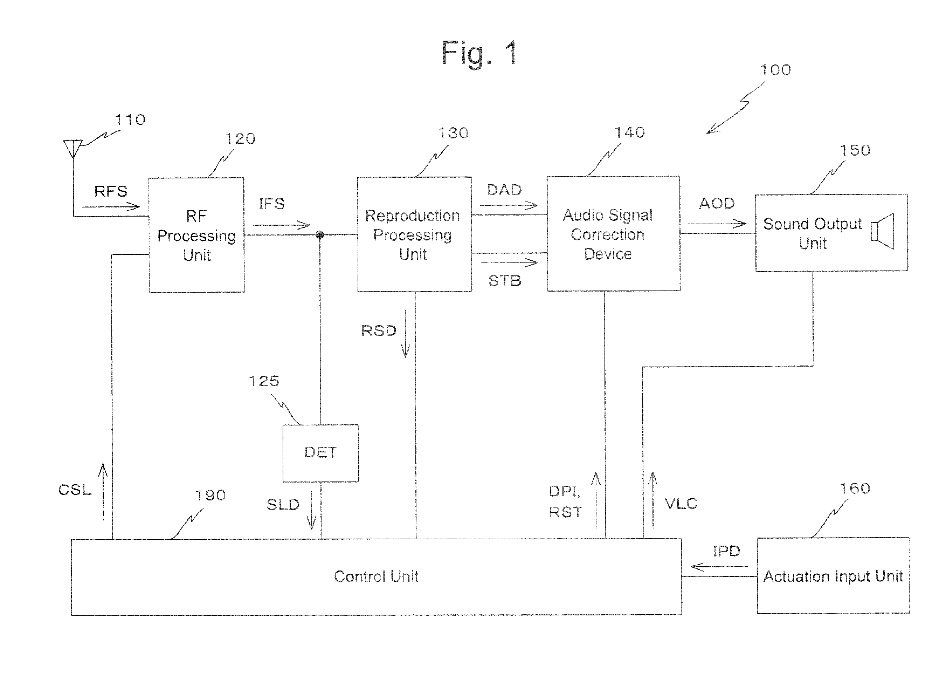

In the following, an embodiment of the present invention will be explained with reference to Figs. 1 through 9. It should be understood that, in the following explanation and in the drawings, the same reference symbols are appended to elements that are the same or equivalent, and duplicated explanation is omitted.

[Structure]

In Fig.1, the structure of a broadcast reception device 100 that incorporates an audio signal correction device 140 according to an embodiment of the present invention and that supports RDS is shown as a block diagram. As shown in Fig.1, in addition to the audio signal correction device 140, the broadcast reception device 100 comprises an antenna 110, an RF processing unit 120, a level detection unit (DET) 125, and a reproduction processing unit 130. Moreover, the broadcast reception device 100 comprises a sound output unit 150, an actuation input unit 160, and a control unit 190.

The antenna 110 described above receives broadcast waves from various broadcasting stations (base stations). And the result of reception by the antenna 110 is sent to the RF processing unit 120 as a received signal RFS.

The RF processing unit 120 described above receives the received signal RFS sent from the antenna 110. And, according to a tuning command CSL from the control unit 190, the RF processing unit 120 performs tuning processing to extract a signal of a channel to be reproduced from the received signal RFS, and generates a signal IFS having a predetermined intermediate frequency. The signal IFS that has been generated in this manner is sent to the DET 125 and to the reproduction processing unit 130.

Here, the RF processing unit 120 comprises an input filter, a high frequency amplifier (RF AMP: Radio Frequency Amplifier), and a band pass filter (hereinafter also termed an "RF filter"). Moreover, the RF processing unit 120 comprises a mixer (a mixing device), an intermediate frequency filter (hereinafter also termed an "IF filter"), and a local oscillation circuit (OSC).

The input filter is a high pass filter that intercepts the low frequency component of the received signal RFS sent from the antenna 110. And the high frequency amplifier amplifies the signal that has passed through the input filter.

From the signal outputted from the high frequency amplifier, the RF filter selectively passes a signal of a specified frequency range. And the mixer mixes together the signal that has passed through the RF filter and a local oscillation signal that is supplied from the local oscillation circuit. Moreover, from the signal outputted from the mixer, the IF filter selects and passes a signal in an intermediate frequency range that is determined in advance.

The local oscillation circuit comprises an oscillator whose oscillation frequency can be controlled by voltage control or the like. According to the tuning command CSL supplied from the control unit 190, the local oscillation circuit generates a local oscillation signal having a frequency that corresponds to the channel to which the RF processing unit 120 is to be tuned, and supplies this local oscillation signal to the mixer.

The DET 125 described above detects the signal level of the signal IFS sent from the RF processing unit 120. The result of this detection reflects the intensity in the vicinity of the antenna 110 of the electric field of the broadcast wave of the channel to be reproduced. The result of detection by the DET 125 is sent to the control unit 190 as a detection result SLD.

The reproduction processing unit 130 described above receives the signal IFS sent from the RF processing unit 120. And the reproduction processing unit 130 processes this signal IFS, and generates an audio signal DAD which is a digital signal and a strobe command STB. The audio signal DAD and the strobe command STB that have been generated in this manner are sent to the audio signal correction device 140. Due to this, the audio signal DAD becomes an input audio signal from the point of view of the audio signal correction device 140.

It should be understood that the details of the structure of the reproduction processing unit 130 will be described hereinafter.

The audio signal correction device 140 described above receives the audio signal DAD and the strobe command STB sent from the reproduction processing unit 130. Moreover, the audio signal correction device 140 receives a hiatus interval command DPI sent from the control unit 190. And, on the basis of the audio signal DAD, the strobe command STB, and the hiatus interval command DPI, the audio signal correction device 140 generates an audio output signal AOD, which is a digital signal. The audio output signal AOD that has been generated in this manner is sent to the sound output unit 150.

Here, the signal level of the hiatus interval command DPI has an "L" (non-significant) level during a normal interval for which it is decided that the audio signal DAD is an input audio signal corresponding to the broadcasting station that is currently tuned into. Moreover, the signal level of the hiatus interval command DPI has an "H" (significant) level during a hiatus interval in which it is decided that the audio signal DAD is not an input audio signal that corresponds to the broadcasting station that is currently tuned into.

Furthermore, the audio signal correction device 140 receives operation control commands RST that are sent from the control unit 190. When an operation control command RST that commands the start of operation is received, the audio signal correction device 140 starts audio signal correction processing after having performed initialization processing that will be described hereinafter. Moreover, when an operation control command RST that commands the end of operation is received, the audio signal correction device 140 ends audio signal correction processing.

It should be understood that the details of the structure of the audio signal correction device 140 will be described hereinafter.

The sound output unit 150 receives the audio output signal AOD sent from the audio signal correction device 140. Moreover, the sound output unit 150 receives an audio volume level control command VLC that is sent from the control unit 190. And the sound output unit 150 outputs audio corresponding to the audio output signal AOD at the audio volume that has been commanded by that audio volume level control command VLC.

Here, the sound output unit 150 comprises a DA (Digital to Analog) converter, an electronic volume part, a power amplification part, and a speaker. In the sound output unit 150, the DA converter receives the audio output signal AOD sent from the audio signal correction device 140. And the DA converter converts this audio output signal AOD to an analog signal, and sends the analog signal after conversion to the electronic volume part.

Upon receipt of this analog signal sent from the DA converter, the electronic volume part adjusts the level of the analog signal according to the audio volume level control command VLC sent from the control unit 190, and sends the signal after level adjustment to the power amplification part as a level adjusted signal. And, upon receipt of this level adjusted signal sent from the electronic volume part, the power amplification part performs power amplification upon the level adjusted signal, and sends it to the speaker as a power amplified signal. As a result, audio corresponding to the audio output signal AOD is outputted from the speaker.

The actuation input unit 160 described above comprises a key part that is provided to a main part of the broadcast reception device 100, and/or a remote input device that includes a key part. Here, a touch panel provided to a display unit not shown in the figures may be used as the key part that is provided to the main part. It should be understood that, instead of such a structure including a key part, or together therewith, a structure may also be employed in which audio is employed for input by using a sound recognition technique. The result of actuation input to the actuation input unit 160 is sent to the control unit 190 as actuation input data IPD. By actuating this actuation input unit 160, the user is enabled to input commands such as a command for designating the channel to be reproduced, a command for audio volume adjustment, and so on.

The control unit 190 described above controls the overall operation of the broadcast reception device 100. This control unit 190 is built to include a timer or the like. When a command for designating the channel to be reproduced that has been inputted to the actuation input unit 160 is notified as actuation input data IPD, the control unit 190 generates a command for tuning to the channel to be reproduced according to that command for designating the channel to be reproduced. And the control unit 190 sends this command for tuning that it has generated to the RF processing unit 120 as a tuning command CSL, and also sends an operation control command RST commanding the start of operation to the audio signal correction device 140.

It should be understood that, when a command for the termination of broadcast reception that has been inputted to the actuation input unit 160 is notified as actuation input data IPD, the control unit 190 terminates the operation of the entire broadcast reception device 100, after having sent an operation control command RST commanding the termination of operation to the audio signal correction device 140.

Moreover, when a command for output audio volume level that has been inputted to the actuation input unit 160 is notified as actuation input data IPD, the control unit 190 generates an audio volume level control command for the channel that is being reproduced according to that output audio volume level command. And the control unit 190 sends this audio volume level control command that has been generated to the sound output unit 150 as the audio volume level control command VLC.

Furthermore, the control unit 190 performs optimum station searching periodically during the reception processing period. During this optimum station searching, first, the control unit 190 repeatedly generates a tuning command for searching for at least one broadcast channel that is broadcasting the same program as the program that is being reproduced, and sends this tuning command to the RF processing unit 120 as a tuning command CSL. And, each time a tuning command for searching is thus sent as a tuning command CSL, the control unit 190 receives the result SLD of detection by the DET 125.

Next, on the basis of the results SLD of detection by the DET 125 that have thus been gathered, the control unit 190 determines the optimum channel. And the control unit 190 generates a command for tuning to this optimum channel that has thus been determined, and sends this command to the RF processing unit 120 as a tuning command CSL. Then the control unit 190 ends this optimum station searching.

It should be understood that, during the processing interval for this optimum station searching, the control unit 190 decides that the audio signal DAD related to the broadcast audio of the channel for reproduction is in the hiatus state, and sets the hiatus interval command DPI to "H" level and thus reports to the audio signal correction device 140 the fact that the system is operating during a hiatus interval. On the other hand, during an interval other than this processing interval for optimum station searching, the control unit 190 decides that the audio signal DAD related to the broadcast audio of the channel for reproduction is being generated, and sets the hiatus interval command DPI to "L" level and thus reports to the audio signal correction device 140 the fact that the system is operating during a normal interval.

<Structure of the reproduction processing unit 130>

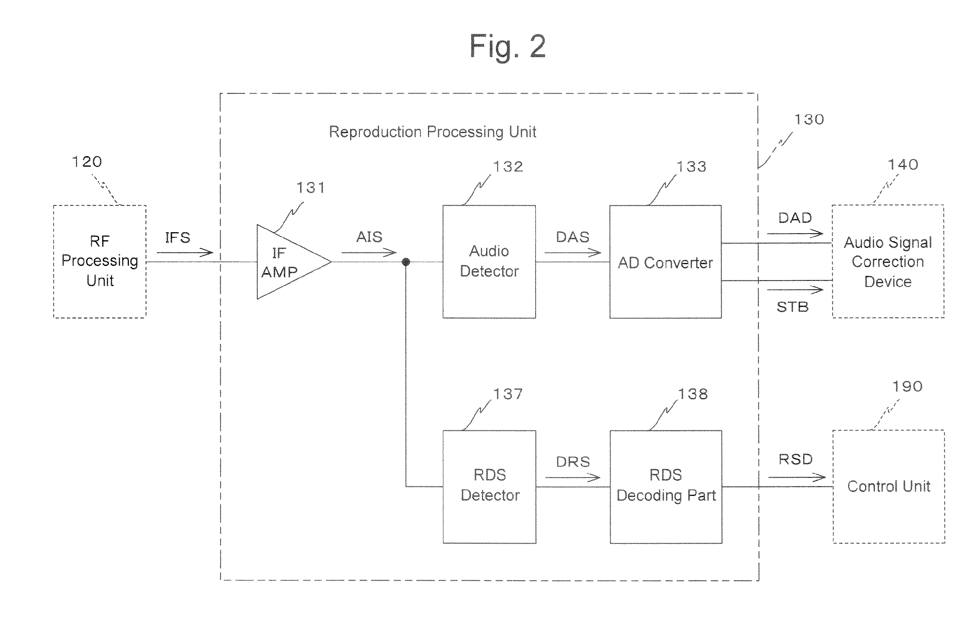

Next, the structure of the reproduction processing unit 130 described above will be explained. As shown in Fig.2, this reproduction processing unit 130 comprises an intermediate frequency amplifier (IF AMP: Intermediate Frequency Amplifier) 131, an audio detector 132, and an AD (Analog to Digital) converter 133. Moreover, the reproduction processing unit 130 comprises an RDS detector 137 and a RDS decoding part 138.

The intermediate frequency amplifier 131 described above receives the signal IFS from the RF processing unit 120. And the intermediate frequency amplifier 131 amplifies this signal IFS. The result of this amplification is sent to the audio detector 132 and to the RDS detector 137 as a signal AIS.

The audio detector 132 described above receives this signal AIS sent from the intermediate frequency amplifier 131. And the audio detector 132 performs demodulation processing according to a predetermined format upon the signal AIS, and generates a demodulated signal DAS. The demodulated signal DAS that has been generated in this manner is sent to the AD converter 133.

The AD converter 133 described above receives the demodulated signal DAS sent from the audio detector 132. And the AD converter 133 converts the level value of this demodulated signal DAS to a digital signal at a predetermined sampling cycle. The digital signal that has been converted in this manner is synchronized to the output of the new AD conversion result as an audio signal DAD, and is sent to the audio signal correction device 140 along with a strobe command STB that shows that the above new AD conversion result is being outputted. Due to this, by obtaining the values of the audio signal DAD in synchronization with the strobe command STB, the audio signal correction device 140 is enabled reliably to gather the AD conversion results of the level value of the demodulated signal DAS outputted at the above predetermined sampling cycle, without any excess or deficiency thereof occurring.

The RDS detector 137 described above receives the signal AIS sent from the intermediate frequency amplifier 131. And the RDS detector 137 performs demodulation processing upon this signal AIS according to a predetermined format in which broadcast related information is included, and thereby generates a demodulated signal DRS. This demodulated signal DRS that has thus been generated is sent to the RDS decoding part 138.

The RDS decoding part 138 described above performs decoding processing upon the demodulated signal DRS from the RDS detector 137, and thereby generates RDS data RSD in which the broadcast related information is included. This RDS data RSD includes such as a program identification code (a PI code) and an AF code, which is data giving frequency information for broadcast channels that belong to the same network as the channel that is currently being reproduced. The RDS data RSD that has been generated in this manner is sent to the control unit 190.

<Structure of the audio signal correction device 140>

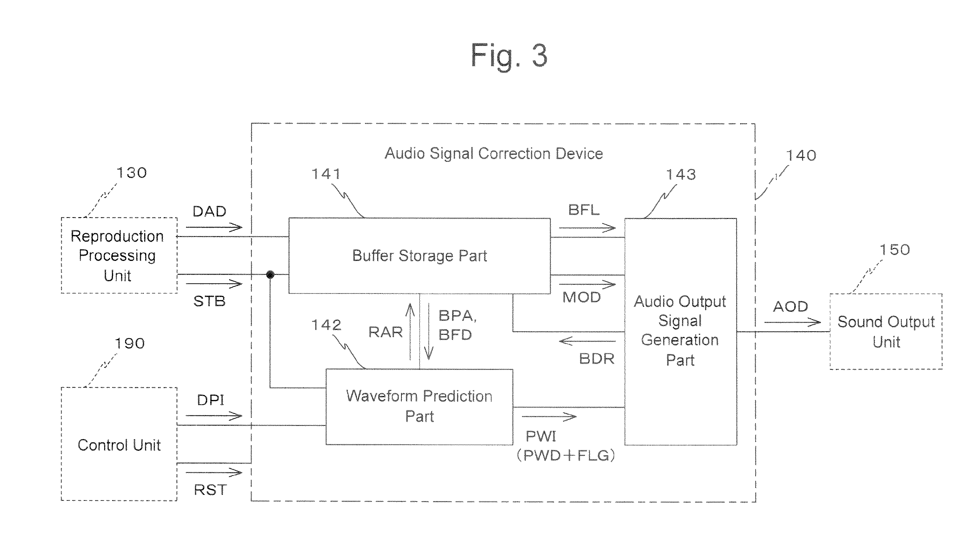

Next, the structure of the audio signal correction device 140 described above will be explained. As shown in Fig. 3, this audio signal correction device 140 comprises a buffer storage part 141, a waveform prediction part 142, and an audio output signal generation part 143.

The buffer storage part 141 described above includes an internal storage part that stores data. In this embodiment, the internal storage part is built to appear as a random access memory from the point of view of the waveform prediction part 142, while, from the point of view of the audio output signal generation part 143, it is built to appear as a FIFO (First In First Out) memory that is implemented by a ring buffer structure.

The buffer storage part 141 receives the audio signal DAD and the strobe command STB sent from the reproduction processing unit 130. And the buffer storage part 141 sequentially writes the data values supplied as the audio signal DAD into its internal storage part at a synchronization timing given by the strobe command STB.

The buffer storage part 141 has a storage capacity that is sufficient to be capable of storing an amount of data supplied as the audio signal DAD during an interval greater than or equal to the data interval length that is required during waveform prediction processing by the waveform prediction part 142 that will be described hereinafter. It should be understood that, in this embodiment, the buffer storage part 141 is adapted to have a storage capacity sufficient to be capable of storing the amount of data that is supplied as the audio signal DAD during an interval of an interval length which is the sum of the already known maximum interval length of the waveform prediction interval in which the waveform prediction part 142 performs waveform prediction, and an interval length that is determined in advance as being the interval length of a trailing audio interval that will be described hereinafter.

Moreover, the buffer storage part 141 is adapted to send the data which, among the data stored in its internal storage part, was written the longest time ago (hereinafter termed the "oldest data") to the audio output signal generation part 143 as data MOD. Furthermore, the buffer storage part 141 is adapted to delete the oldest data in its internal storage part, when it receives a read report BDR sent from the audio output signal generation part 143.

Yet further, the buffer storage part 141 sends a buffer full command BFL to the audio output signal generation part 143, when the volume of data that has not yet been read out by the audio output signal generation part 143 becomes so great that it fills up the entire storage space within the internal storage part.

Moreover, the buffer storage part 141 sends a buffer pointer BPA that specifies the address in the internal storage part in which the newest data is written to the waveform prediction part 142. Furthermore, upon receipt of a read signal RAR that specifies an address in the internal storage part, the buffer storage part 141 sends the data that is stored in the specified address to the waveform prediction part 142 as data BFD.

The waveform prediction part 142 described above receives the strobe command STB that is sent from the reproduction processing unit 130. Furthermore, the waveform prediction part 142 receives the hiatus interval command DPI that is sent from the control unit 190. And the waveform prediction part 142 calculates a predicted waveform in the waveform prediction interval, on the basis of the storage capacity of the internal storage part of the buffer storage part 141, the amount of data stored in the internal storage part of the buffer storage part 141, the strobe command STB, and the hiatus interval command DPI. During the waveform prediction interval, time series data for the predicted waveform that has been calculated in this manner is sent to the audio output signal generation part 143 as predicted waveform data PWD, in synchronization with the output from the buffer storage part 141 of the data MOD. Here, it is arranged for the predicted waveform data PWD to be sent to the audio output signal generation part 143 as waveform prediction information PWI that is integrated with flags FLG specifying an interval classification that will be described hereinafter.

It should be understood that the waveform prediction calculation processing performed by the waveform prediction part 142 and the bit structure of the waveform prediction information PWI will be described hereinafter.

The audio output signal generation part 143 described above receives the buffer full command BFL and the data MOD that are sent from the buffer storage part 141 and the waveform prediction information PWI that is sent from the waveform prediction part 142. Here, the audio output signal generation part 143 reads the data MOD and the waveform prediction information PWI, each time it receives a buffer full command BFL.

And, each time it reads the data MOD and the waveform prediction information PWI, the audio output signal generation part 143 generates the audio output signal AOD on the basis of the value of the data MOD and the waveform prediction information PWI. Here, the audio output signal AOD is generated by performing weighted averaging upon the values of the data MOD and the predicted waveform data PWD for the waveform prediction information PWI, in a leading overlapping interval and in a trailing overlapping interval that will be described hereinafter. The audio output signal AOD that has been generated in this manner is sent to the sound output unit 150.

It should be understood that the details of the weightings employed in the weighting averaging by the audio output signal generation part 143 and in the processing performed by the waveform prediction part 142 for generation of the audio output signal will be described hereinafter.

Moreover, when the operation control command RST sent from the control unit 190 specifying the start of operation is received, the audio signal correction device 140 executes initialization processing. Due to this initialization processing being executed, all of the data that is stored in the internal storage of the buffer storage part 141 is deleted. Furthermore, due to this initialization processing being executed, along with the waveform prediction part 142 stopping the waveform prediction processing that it has been performing up until the present and starting waveform prediction processing again, also the audio output signal generation part 143 stops the audio output signal generation processing that it has been performing up until the present, and starts audio output signal generation processing again.

«The intervals related to waveform prediction processing»

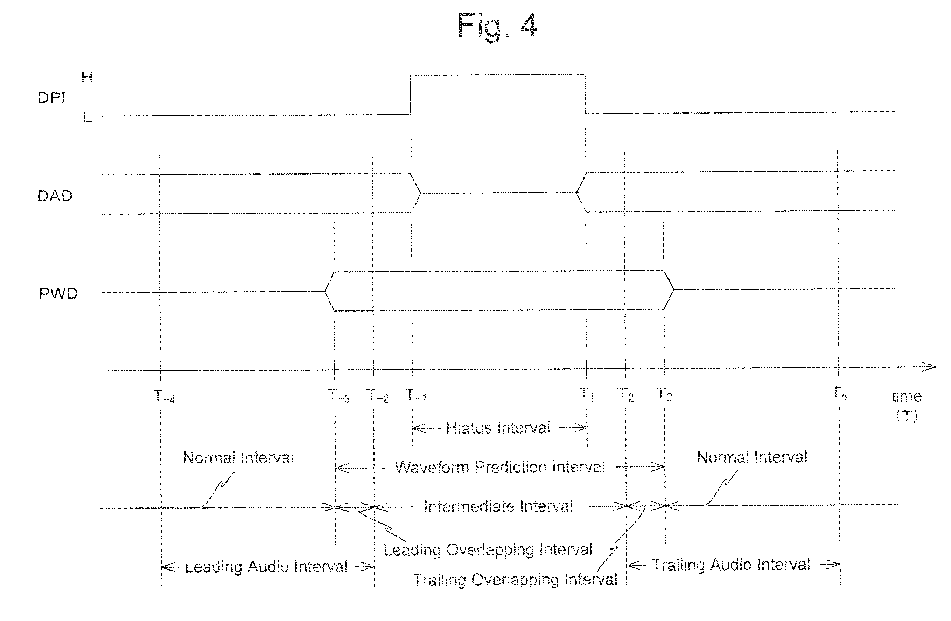

Now the various intervals related to the waveform prediction processing performed by the waveform prediction part 142 will be explained with reference to Fig.4. It should be understood that it will be supposed that the above described hiatus interval in which the audio signal DAD related to the broadcast audio of the channel for reproduction is interrupted is the instant from the time instant $T_{-1}$ to the time instant $T_1$ ($>T_{-1}$). Here, the fact that the current time point is within the hiatus interval is indicated by the fact that, as described above, the hiatus interval command DPI has gone to "H" level.

The waveform prediction part 142 calculates waveform information (hereinafter termed the "leading audio waveform information") corresponding to the audio signal DAD in a leading audio interval (i.e. the interval from the time instant $T_{-4}$ ($<T_{-1}$) to the time instant $T_{-2}$ ($T_{-4}<T_{-2}\leq T_{-1}$), which is an interval that is earlier than the hiatus interval) on the basis of the data related to that audio signal DAD during the abovementioned leading audio interval. Moreover, on the basis of the data related to the audio signal DAD in a trailing audio interval (i.e. the interval from the time instant $T_2$ ($\geq T_1$) to the time instant $T_4$ ($>T_2$), which is an interval that is subsequent to the hiatus interval), the waveform prediction part 142 calculates waveform information (hereinafter termed the "trailing audio waveform information") corresponding to the audio signal DAD in the abovementioned trailing audio interval.

It should be understood that the length of the leading audio interval ($=T_{-2}-T_{-4}$) is determined in advance on the basis of experiment, simulation, experience or the like, from the standpoint of making it possible to acquire the leading audio waveform information rapidly with the desired accuracy by calculation processing of the leading audio waveform information which will be described hereinafter. Moreover, the length of the trailing audio interval (=$T_4$-$T_2$) is determined in advance on the basis of experiment, simulation, experience or the like, from the standpoint of making it possible to acquire the trailing audio waveform information rapidly with the desired accuracy by calculation processing of the trailing audio waveform information which will be described hereinafter.

In this embodiment, the time instant $T_{-2}$ is an earlier time instant than the time instant $T_{-1}$, and the time instant $T_2$ is a later time instant than the time instant $T_1$. This is arranged in consideration of the fact that there is a possibility that the audio signal DAD may not reliably reflect the broadcast audio directly before and directly after the hiatus interval.

Information related to the interval length of the abovementioned leading audio interval and to the interval length of the abovementioned trailing audio interval, to the time gap between the hiatus interval and the leading audio interval, and to the time gap between the hiatus interval and the trailing audio interval, is stored within the waveform prediction part 142. In this embodiment, the interval length of the leading audio interval and the interval length of the trailing audio interval are the same. Moreover, in this embodiment, the time gap between the hiatus interval and the leading audio interval, and the time gap between the hiatus interval and the trailing audio interval, are set to be the same.

It should be understood that, in the following explanation, it will be supposed that the interval during the waveform prediction interval between the leading audio interval and the trailing audio interval (i.e. the interval from the time instant $T_{-2}$ to the time instant $T_2$) will be termed the "intermediate interval".

The waveform prediction part 142 calculates the predicted waveform in the waveform prediction interval on the basis of the leading audio waveform information and the trailing audio waveform information described above. This waveform prediction interval is the interval from a time instant $T_{-3}$ ($T_{-4}$<$T_{-3}$<$T_{-2}$) to a time instant $T_3$ ($T_2$<$T_3$<$T_4$). Due to this, in addition to the hiatus interval described above, a leading overlapping interval from the time instant $T_{-3}$ to the time instant $T_{-2}$ (i.e. a first overlapping interval) and a trailing overlapping interval from the time instant $T_2$ to the time instant $T_3$ (i.e. a second overlapping interval) are included in the waveform prediction interval.

It should be understood that the interval length of the leading overlapping interval (=$T_{-2}$-$T_{-3}$) and the interval length of the trailing overlapping interval (=$T_3$-$T_2$) are determined in advance on the basis of experiment, simulation, experience and the like from the viewpoint of preventing the occurrence of discontinuity in the audio waveform corresponding to the audio output signal AOD that is generated by the audio output signal generation processing performed by the audio output signal generation part 143 that will be described hereinafter.

Information specifying this leading overlapping interval length and this trailing overlapping interval length is stored within the waveform prediction part 142. In this embodiment, the interval length of the leading overlapping interval and the interval length of the trailing overlapping interval are set to be the same.

It should be understood that, in this embodiment, the waveform prediction part 142 is adapted to be capable of determining whether the data that is being outputted from the buffer storage part 141 is data that corresponds to the leading overlapping interval, to the trailing overlapping interval, or to the interval between the leading overlapping interval and the trailing overlapping interval, on the basis of the change timing of the signal level of the hiatus interval command DPI described above and the state of reception of the strobe command STB, and the storage capacity of the internal storage part of the buffer storage part 141 that is housed in the interior of the waveform prediction part 142 as described above, information specifying the interval length of the leading audio interval and the interval length of the trailing audio interval, the time gap between the hiatus interval and the leading audio interval, the time gap between the hiatus interval and the trailing audio interval, and the interval length of the leading overlapping interval and the interval length of the trailing overlapping interval.

<<The bit structure of the waveform prediction information PWI>>

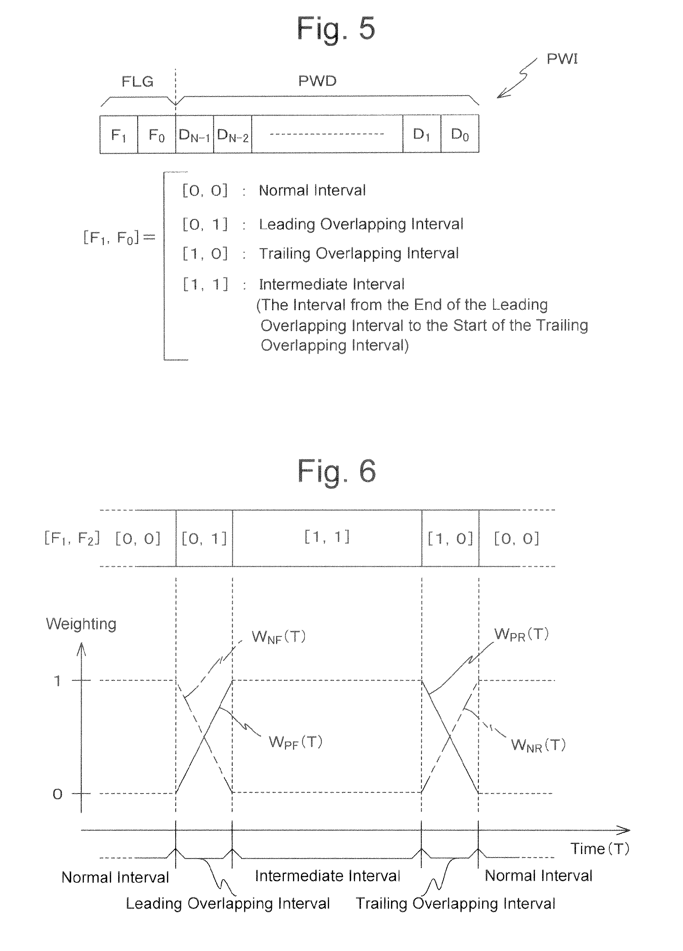

Next, the bit structure of the waveform prediction information PWI will be explained. In this embodiment, as shown in Fig.5, in the waveform prediction information PWI, it is arranged for the values at each time instant of flags FLG [$F_1$, $F_0$] to be specified by the highest ranking two bits, while values at each time instant of the predicted waveform data PWD [$D_{N-1}$, $D_{N-2}$, ... $D_1$, $D_0$] are specified by the other bits.

Here, in this embodiment, if the value of [$F_1$, $F_0$] is the value [0, 0], then this shows that the predicted waveform data PWD is data for a normal interval outside the waveform prediction interval; while, if the value of [$F_1$, $F_0$] is the value [0, 1], then this shows that the predicted waveform data PWD is data for the leading overlapping interval. Moreover, if the value of [$F_1$, $F_0$] is the value [1, 0], then this shows that the predicted waveform data PWD is data for the trailing overlapping interval; while, if the value of [$F_1$, $F_0$] is the value [1, 1], then this shows that the predicted waveform data PWD is data for the intermediate interval.

<<The weightings employed in the weighting averaging>>

Next, weightings that the audio output signal generation part 143 employs in performing weighted averaging calculation will be explained.

In the leading overlapping interval, by taking the weightings for the values (=N(T)) of the data MOD as being $W_{NF}(T)$, and by taking the weightings for the values (=P(T)) of the predicted waveform data PWD as being $W_{PF}(T)$, the audio output signal generation part 143 calculates weighted averages of the values N(T) and the values P(T) according to the following Equation (1):

$$Z(T) = W_{NF}(T) \cdot N(T) + W_{PF}(T) \cdot P(T) \ldots (1)$$

Here, in this embodiment, as shown in Fig. 6, it is arranged for the weightings $W_{NF}(T)$ in the leading overlapping interval to decrease linearly from "1" to "0". Moreover, it is arranged for the weightings $W_{PF}(T)$ in the leading overlapping interval to increase linearly from "0" to "1".

And, in the trailing overlapping interval, by taking the weightings for the values (=N(T)) of the data MOD as being $W_{NR}(T)$, and by taking the weightings for the values (=P(T)) of the predicted waveform data PWD as being $W_{PR}(T)$, the audio output signal generation part 143 calculates weighted averages of the values N(T) and the values P(T) according to the following Equation (2):

$$Z(T) = W_{NR}(T) \cdot N(T) + W_{PR}(T) \cdot P(T) \ldots (2)$$

Here, in this embodiment, as shown in Fig. 6, it is arranged for the weightings $W_{NR}(T)$ in the trailing overlapping interval to increase linearly from "0" to "1". Moreover, it is arranged for the weightings $W_{PR}(T)$ in the trailing overlapping interval to decrease linearly from "1" to "0".

[Operation]

Next, the operation of the broadcast reception device 100 having the structure described above will be explained, with attention being principally focused upon the audio signal correction processing performed by the audio signal correction device 140.

It should be understood that it will be supposed that the broadcast reception device 100 has already started operation to receive a broadcast, and that the control unit 190 has already sent an operation control command RST to the audio signal correction device 140, commanding the start of operation. Moreover, it will be supposed that the control unit 190 has performed setting of the channel to be reproduced upon the RF processing unit 120 according to a command for tuning that has been inputted to the actuation input unit 160. Yet further, it will be supposed that a setting for output audio volume level has been performed upon the sound output unit 150 according to an output audio volume level command that has been inputted to the actuation input unit 160.

In other words, it will be supposed that the audio signal DAD and the strobe command STB corresponding to the broadcast that utilizes the abovementioned channel to be reproduced are being supplied to the audio signal correction device 140 by the broadcast reception device 100, with the exception of the interval for optimum station searching processing. Moreover, it will be supposed that the audio output signal AOD corresponding to the broadcast that utilizes the abovementioned channel to be reproduced is being supplied to the sound output unit 150 by the broadcast reception device 100.

When the broadcast reception device 100 is in this kind of operational state, the optimum station searching processing is periodically executed. At the start of this optimum station searching processing, the control unit 190 changes the level of the hiatus interval command DPI from "L" to "H". Moreover, at the end of the optimum station searching processing, the control unit 190 changes the level of the hiatus interval command DPI from "H" to "L".

When the broadcast reception device 100 is in this kind of operational state, in the audio signal correction device 140, data buffering processing is executed by the buffer storage part 141, waveform prediction processing and synchronized output processing are executed by the waveform prediction part 142, and output audio generation processing is executed by the audio output signal generation part 143.

<The data buffering processing>

Next, the data buffering processing performed by the buffer storage part 141 will be explained. During this data buffering processing, the buffer storage part 141 sequentially writes the data values that are supplied as the audio signal DAD into its internal storage part at a synchronization timing given by the strobe command STB. And, along with sending the oldest data in the internal storage part to the audio output signal generation part 143 as data MOD, the buffer storage part 141 also sends to the waveform prediction part 142 a buffer pointer BPA into the internal storage part where the newest data is written.

Moreover, when the amount of data that has not been read out by the audio output signal generation part 143 reaches the state in which the entire region within the internal storage part has been written into and filled up, the buffer storage part 141 sends a buffer full command BFL to the audio output signal generation part 143. And, upon receipt of a read report BDR sent from the audio output signal generation part 143, the buffer storage part 141 deletes the oldest data in its internal storage part at that time point.

<The waveform prediction processing>

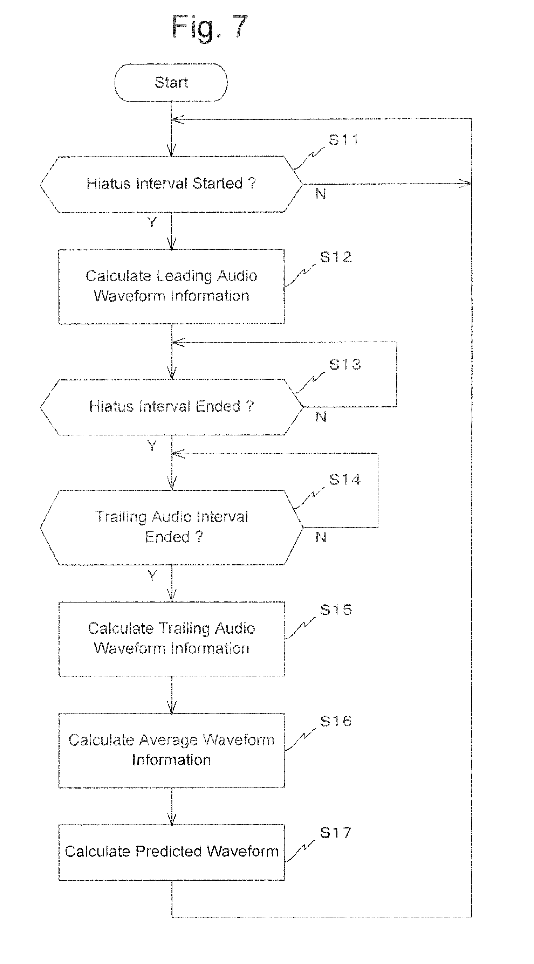

Next, the waveform prediction processing performed by the waveform prediction part 142 will be explained. During this waveform prediction processing, as shown in Fig. 7, first in a step S11 the waveform prediction part 142 makes a decision as to whether or not a hiatus interval has started by making a decision as to whether or not the hiatus interval command DPI has changed from "L" level to "H" level. If the result of this decision is negative (N in the step S11), then the processing of this step S11 is repeated.

If the hiatus interval command DPI changes from "L" level to "H" level, so that the result of the decision in the step S11 becomes affirmative (Y in the step S11), then the flow of control proceeds to a step S12. In this step S12, the waveform prediction part 142 calculates leading audio waveform information, which is waveform information for the leading audio interval related to this current hiatus interval.

During this calculation of the leading audio waveform information, first, the waveform prediction part 142 specifies the region of the data corresponding to this leading audio interval in the internal storage part of the buffer storage part 141, on the basis of the buffer pointer BPA sent from the buffer storage part 141 at this time point. Next, the waveform prediction part 142 reads in the data in this storage region that has been specified at this time.

Next, the waveform prediction part 142 performs Fourier transformation upon the time period waveform of the audio in this leading audio interval on the basis of the data that has thus been read in, and calculates its amplitude spectrum (i.e. a leading amplitude spectrum) and its phase spectrum (i.e. a leading phase spectrum) as leading audio waveform information. And the waveform prediction part 142 internally stores this leading audio waveform information that has thus been calculated, and then the processing of this step S12 is finished.

Next, in a step S13, the waveform prediction part 142 makes a decision as to whether or not the hiatus interval has ended by making a decision as to whether or not the hiatus interval command DPI has changed from "H" level to "L" level. If the result of this decision is negative (N in the step S13), then the processing of this step S13 is repeated.

If the hiatus interval command DPI changes from "H" level to "L" level, so that the result of the decision in the step S13 becomes affirmative (Y in the step S13), then the flow of control proceeds to a step S 14. In this step S14, the waveform prediction part 142 makes a decision as to whether or not the trailing audio interval has ended. Here, the waveform prediction part 142 makes this decision as to whether or not the trailing audio interval has ended, by making a decision as to whether or not, after the hiatus interval command DPI has changed from "H" level to "L" level, the number of strobe commands STB that have been sent periodically from the reproduction processing unit 130 has reached a number that is determined in advance.

If the result of this decision in the step S14 is negative (N in the step S 14), then the processing of this step S 14 is repeated. And, when the trailing audio interval ends and the result of the decision in the step S14 becomes affirmative (Y in the step S14), then the flow of control proceeds to a step S 15.

In this step S15, the waveform prediction part 142 calculates trailing audio waveform information, which is waveform information for the trailing audio interval related to this current hiatus interval.

During this calculation of the trailing audio waveform information, first, the waveform prediction part 142 specifies the region of the data corresponding to this trailing audio interval in the internal storage part of the buffer storage part 141, on the basis of the buffer pointer BPA sent from the buffer storage part 141 at this time point. Next, the waveform prediction part 142 reads in the data in this storage region that has been specified at this time.

Next, the waveform prediction part 142 performs Fourier transformation upon the time period waveform of the audio in this trailing audio interval on the basis of the data that has thus been read in, and calculates its amplitude spectrum (i.e. a trailing amplitude spectrum) and its phase spectrum (i.e. a trailing phase spectrum) as trailing audio waveform information. And the waveform prediction part 142 internally stores this trailing audio waveform information that has thus been calculated, and then the processing of this step S 15 is finished.

Next, in a step S16, the waveform prediction part 142 calculates average waveform information. In this calculation of the average waveform information, the waveform prediction part 142 calculates, as the average waveform information, an average amplitude spectrum which is the average of the leading amplitude spectrum and the trailing amplitude spectrum, and an average phase spectrum which is the average of the leading phase spectrum and the trailing phase spectrum.

And next, in a step S 17, the waveform prediction part 142 performs reverse Fourier transformation upon the average waveform information that has thus been calculated this time, and thereby calculates a predicted waveform, which is the time period waveform during the waveform prediction interval this time. And the waveform prediction part 142 internally stores the data for this predicted waveform that has thus been calculated.

When the calculation of the predicted waveform terminates in this manner, the flow of control returns to the step S11. Subsequently the processing of the steps S11 through S17 is repeated, and, each time a hiatus interval occurs, the predicted waveform for that waveform prediction interval is calculated.

<The synchronized output processing>

Next, the synchronized output processing performed by the waveform prediction part 142 will be explained. This synchronized output processing is executed in parallel with the waveform prediction processing described above.

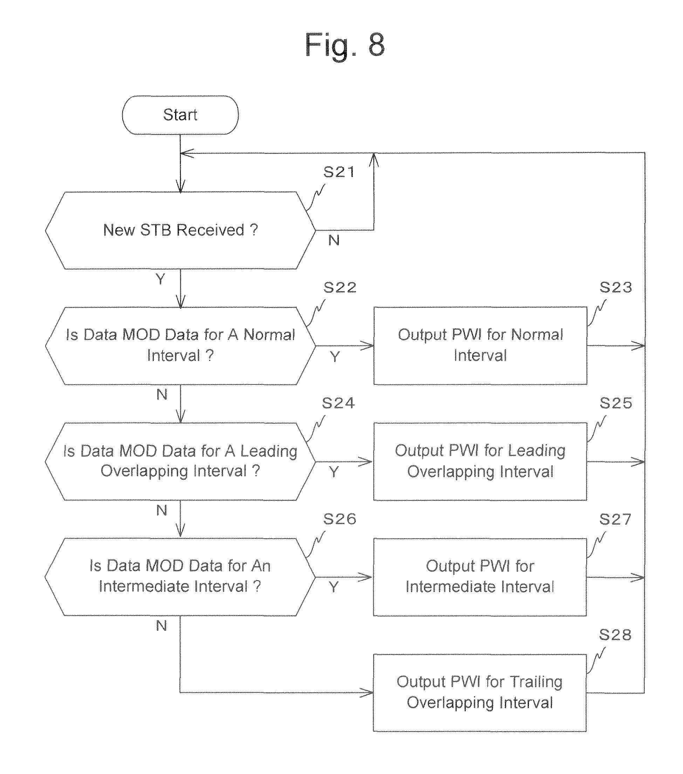

During this synchronized output processing, as shown in Fig.8, first, in a step S21, the waveform prediction part 142 makes a decision as to whether or not a new strobe command STB has been received. If the result of this decision is negative (N in the step S21), then the processing of this step S21 is repeated.

When a new strobe command STB sent from the reproduction processing unit 130 is received and the result of the decision in the step S21 becomes affirmative (Y in the step S21), then the flow of control proceeds to a step S22. In this step S22, the waveform prediction part 142 makes a decision as to whether or not the data MOD being outputted from the buffer storage part 141 is data for a normal interval. If the result of this decision is affirmative (Y in the step S22), then the flow of control proceeds to a step S23.

In this step S23, the waveform prediction part 142 sends to the audio output signal generation part 143 waveform prediction information PWI in which the flags FLG [$F_1$, $F_0$] have the values [0, 0] and the values of the predicted waveform data PWD are indeterminate. And then the flow of control returns to the step S21.

But if the result of the decision in the step S22 described above is negative (N in the step S22), then the flow of control proceeds to a step S24. In this step S24, the waveform prediction part 142 makes a decision as to whether or not the data MOD being outputted from the buffer storage part 141 is data for a leading overlapping interval. If the result of this decision is affirmative (Y in the step S24), the flow of control proceeds to a step S25.

In this step S25, the waveform prediction part 142 sends to the audio output signal generation part 143 waveform prediction information PWI in which the flags FLG [$F_1$, $F_0$] have the values [0, 1] and the values of the predicted waveform data PWD are predicted waveform data values that correspond timewise to the data MOD being outputted from the buffer storage part 141. And then the flow of control returns to the step S21.

But if the result of the decision in the step S24 described above is negative (N in the step S24), then the flow of control proceeds to a step S26. In this step S26, the waveform prediction part 142 makes a decision as to whether or not the data MOD being outputted from the buffer storage part 141 is data for an intermediate interval. If the result of this decision is affirmative (Y in the step S26), the flow of control proceeds to a step S27.

In this step S27, the waveform prediction part 142 sends to the audio output signal generation part 143 waveform prediction information PWI in which the flags FLG [$F_1$, $F_0$] have the values [1, 1] and the values of the predicted waveform data PWD are predicted waveform data values that correspond timewise to the data MOD being outputted from the buffer storage part 141. And then the flow of control returns to the step S21.

But if the result of the decision in the step S26 described above is negative (N in the step S26), then the flow of control proceeds to a step S28. In this step S28, the waveform prediction part 142 sends to the audio output signal generation part 143 waveform prediction information PWI in which the flags FLG [$F_1$, $F_0$] have the values [1, 0] and the values of the predicted waveform data PWD are predicted waveform data values that correspond timewise to the data MOD being outputted from the buffer storage part 141. And then the flow of control returns to the step S21.

Subsequently, the processing of the steps S21 through S28 is repeated. As a result, each time a strobe command STB is received, waveform prediction information PWI that corresponds timewise to the data MOD that is being outputted from the buffer storage part 141 is sent from the waveform prediction part 142 to the audio output signal generation part 143.

<The output audio generation processing>

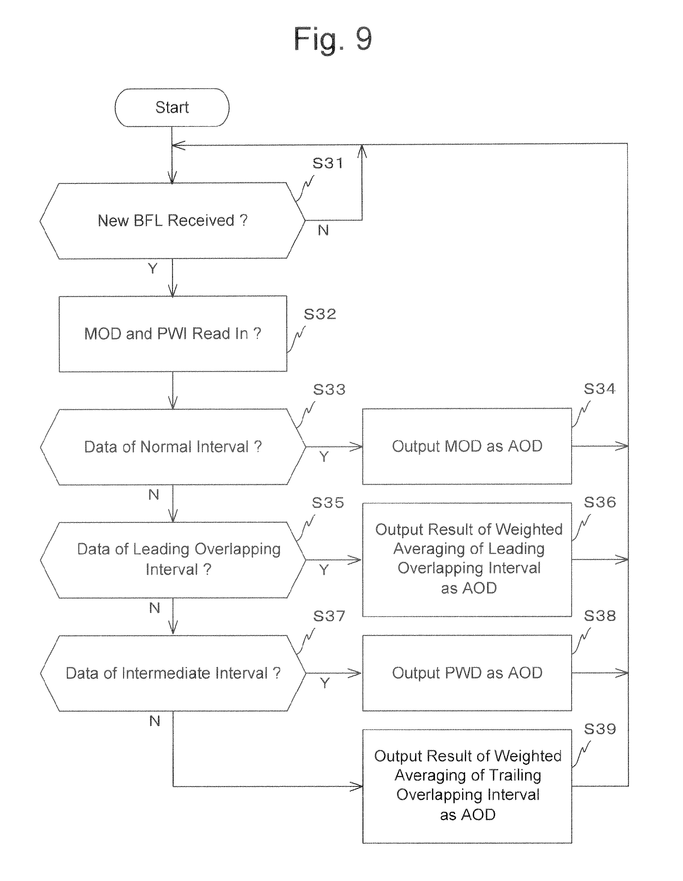

Next, the output audio generation processing performed by the audio output signal generation part 143 will be explained. During this output audio generation processing, as shown in Fig.9, first, in a step S31, the audio output signal generation part 143 makes a decision as to whether or not a new buffer full command BFL has been received. If the result of this decision is negative (N in the step S31), then the processing of this step S31 is repeated.

When a new buffer full command BFL has been sent from the buffer storage part 141 is received, so that the result of the decision in the step S31 is affirmative (Y in the step S31), the flow of control proceeds to a step S32. In this step S32, the audio output signal generation part 143 reads in the data MOD sent from the buffer storage part 141 and the waveform prediction information PWI sent from the waveform prediction part 142.

Next, the audio output signal generation part 143 sends a read report BDR to the buffer storage part 141. As a result, the oldest data in the internal storage part is deleted by the buffer storage part 141, so that the buffer full state of the buffer storage part 141 is eliminated.

Next, in a step S33, by making a decision as to whether or not the values of the flags FLG $[F_1, F_0]$ in the waveform prediction information PWI that has been read in are $[0, 0]$, the audio output signal generation part 143 makes a decision as to whether or not data for a normal interval has been read in. If the result of this decision is affirmative (Y in the step S33), the flow of control proceeds to a step S34.

In this step S34, among the data MOD and the predicted waveform data PWD in the waveform prediction information PWI that have been read in, the audio output signal generation part 143 takes the data MOD as output audio data, and sends it to the sound output unit 150 as the audio output signal AOD. And then the flow of control returns to the step S31.

But, if the result of the decision in the step S33 described above is negative (N in the step S33), then the flow of control is transferred to a step S35. In this step S35, by making a decision as to whether or not the values of the flags FLG $[F_1, F_0]$ that have been read in are $[0, 1]$, the audio output signal generation part 143 makes a decision as to whether or not data for a leading overlapping interval has been read in. If the result of this decision is affirmative (Y in the step S35), the flow of control proceeds to a step S36.

In this step S36, the audio output signal generation part 143 calculates values (Z(T)) for the output audio data according to Equation (1) above, on the basis of, both of data have been read, the data MOD and the predicted waveform data PWD, and on the basis of the elapsed time from the start of the leading overlapping interval, which is specified from the number of times that a read report BDR has been issued after the values of the flags FLG $[F_1, F_0]$ that were read in became $[0, 1]$. And the audio output signal generation part 143 sends these values of output audio data that it has calculated to the sound output unit 150 as the audio output signal AOD. Then the flow of control returns to the step S31.

But, if the result of the decision in the step S35 described above is negative (N in the step S35), then the flow of control is transferred to a step S37. In this step S37, by making a decision as to whether or not the values of the flags FLG $[F_1, F_0]$ that have been read in are $[1, 1]$, the audio output signal generation part 143 makes a decision as to whether or not data for an intermediate interval has been read in. If the result of this decision is affirmative (Y in the step S37), the flow of control proceeds to a step S38.

In this step S38, among the data MOD and the predicted waveform data PWD that has been read in, the audio output signal generation part 143 takes the predicted waveform data PWD as output audio data, and sends it to the sound output unit 150 as the audio output signal AOD. Then the flow of control returns to the step S31.

But, if the result of the decision in the step S37 described above is negative (N in the step S37), then the flow of control is transferred to a step S39. In this step S39, the audio output signal generation part 143 calculates values (Z(T)) for the output audio data according to Equation (2) above, on the basis of, the both data have been read, the data MOD and the predicted waveform data PWD, and on the basis of the elapsed time from the start of the trailing overlapping interval, which is specified from the number of times that a read report BDR has been issued after the values of the flags FLG $[F_1, F_0]$ that were read in became $[1, 0]$. And the audio output signal generation part 143 sends these values of output audio data that it has calculated to the sound output unit 150 as the audio output signal AOD. Then the flow of control returns to the step S31.

Subsequently, the processing of the steps S31 through S39 is repeated. As a result, each time a buffer full command BFL is received, new data values are sent to the sound output unit 150 from the audio output signal generation part 143 as an audio output signal AOD. And audio according to this audio output signal AOD that has been corrected by the audio signal correction device 140 is outputted from the speaker of the sound output unit 150.

As has been explained above, in this embodiment, the waveform prediction part 142 calculates the predicted waveform in the waveform prediction interval on the basis of the leading audio waveform, which is the audio waveform in the leading audio interval which is the interval previous to the hiatus interval in which the audio signal DAD related to the broadcast audio of the channel to be reproduced is interrupted, and on the basis of the trailing audio waveform, which is the audio waveform in the trailing audio interval which is the interval subsequent to that hiatus interval. Here, the waveform prediction interval continually and successively becomes an interval that includes the hiatus interval, the leading overlapping interval that overlaps the leading audio interval, and the trailing overlapping interval that overlaps the trailing audio interval.

And the audio output signal generation part 143 generates an audio output signal AOD for the waveform prediction interval on the basis of the leading audio waveform, the trailing audio waveform, and the predicted waveform. Here, the audio output signal generation part 143 generates the audio output signal AOD so that, during the waveform prediction interval, during the leading overlapping interval, and during the trailing overlapping interval, the audio output signal AOD has a waveform that is created by weighted averaging of the waveforms of the audio signal DAD and the predicted waveform, while it has the predicted waveform in the intermediate interval between the leading overlapping interval and the trailing overlapping interval.

Thus, according to the audio signal correction device of this embodiment, it is possible to generate an audio output signal that is capable of preventing any feeling of discontinuity on the part of the listener.

Moreover, in this embodiment, in the weighted averaging of the waveform of the audio signal DAD and the predicted waveform in the leading overlapping interval and in the trailing overlapping interval, the weighting given to the predicted waveform becomes greater, the closer to the hiatus interval. Due to this, it is possible effectively to suppress the occurrence of discontinuities in the audio waveform corresponding to the audio output signal AOD.

Furthermore, in this embodiment, during the calculation of the predicted waveform, first, the waveform prediction part 142 performs Fourier transformation upon the leading audio waveform so as to calculate the leading amplitude spectrum and the leading phase spectrum, and also performs Fourier transformation upon the trailing audio waveform so as to calculate the trailing amplitude spectrum and the trailing phase spectrum. Next, the waveform prediction part 142 calculates the average amplitude spectrum of the leading amplitude spectrum and of the trailing amplitude spectrum, and also calculates the average phase spectrum of the leading phase spectrum and the trailing phase spectrum. And the waveform prediction part 142 then performs reverse Fourier transformation upon this average amplitude spectrum and this average phase spectrum, thus calculating the predicted waveform by digital calculation. Due to this, it is possible to perform calculation of the predicted waveform in a logical manner with a simple structure.

[MODIFICATION OF THE EMBODIMENT]

The present invention is not limited to the embodiment described above; alterations of various kinds are possible.

For example while, in the embodiment described above, gaps were provided between the hiatus interval and the leading audio interval and between the hiatus interval and the trailing audio interval, it would also be acceptable to arrange to set the leading audio interval directly before the hiatus interval, and to set the trailing audio interval directly after the hiatus interval.

Moreover while, in the embodiment described above, during the generation of the audio output signal in the leading overlapping interval and in the trailing overlapping interval, it was arranged to calculate the weighted averages by employing weightings that changed linearly as shown in Fig.6 above, it would also be acceptable to arrange to calculate the weighted averages by employing weightings that change along curved lines.

Furthermore, in the embodiment described above, it was arranged to perform correction of the audio signal in the waveform prediction interval after the output of time sequence data from the buffer storage part. By contrast, it would also be acceptable to arrange, before the output of data in time sequence from the buffer storage part becomes output of the data corresponding to the waveform prediction interval, to perform a similar calculation for calculating correction of the audio signal by the audio output signal generation part to that of the embodiment described above, and to rewrite the data within the buffer storage part corresponding to the waveform prediction interval to the data of the correction processing result.

Moreover, in the embodiment described above, if an interruption occurs in the audio signal related to the broadcast audio of the channel to be reproduced during the optimum station searching interval, then it is arranged for the audio signal correction device of the present invention to perform correction of the audio signal. By contrast, it would also be acceptable to arrange for the audio signal correction device of the present invention to perform correction of the audio signal, if an interruption occurs in the audio signal related to the broadcast audio of the channel to be reproduced during automatic searching for a broadcasting station that can be received as well.

Moreover while, in the embodiment described above, it was arranged to provide the audio signal correction device of the present invention to a broadcast reception device that employed the RDS format, also, as a matter of course, it would be possible to arrange for some device other than a broadcast reception device employing the RDS format to be equipped with the audio signal correction device of the present invention, if a hiatus interval may occur in some audio signal.

It should be understood that it would also be acceptable to arrange for the audio signal correction device of the embodiment described above to be constituted by a computer that serves as a calculation means which is equipped with a DSP (Digital Signal Processor) and so on, and to arrange for part or all of the processing of the embodiment described above to be executed by that computer executing a program that is prepared in advance.

This program could be recorded upon a computer-readable recording medium such as a hard disk, a CD-ROM, a DVD or the like, and could be executed by being read out from the recording medium and being executed by the above computer. Moreover, it would be possible to arrange for this program to be acquired in the state of being recorded upon a transportable recording medium such as a CD-ROM, a DVD or the like; or the program could also be acquired in the state of being distributed via a network such as the internet or the like.

**Claims**

1. An audio signal correction device that generates a continuous audio output signal by correcting an input audio signal that includes a hiatus interval, **characterized by** comprising:

a buffer storage part that stores the waveform of said input audio signal until the present time point, over a predetermined time period that is longer than said hiatus interval;

a waveform prediction part that calculates a predicted waveform in a waveform prediction interval on the basis of a first waveform in said buffer storage part during a first interval, which is an interval earlier than said hiatus interval, and on the basis of a second waveform in said buffer storage part during a second interval, which is an interval subsequent to said hiatus interval; and

an audio output signal generation part that generates said audio output signal during said waveform prediction interval, on the basis of said first waveform, said second waveform, and said predicted waveform that has been calculated; and in that:

said waveform prediction interval is an interval that successively includes said hiatus interval, a first overlap interval that overlaps said first interval, and a second overlap interval that overlaps said second interval: and during said waveform prediction interval, said audio output signal is a signal that has a waveform during said first and second overlap intervals that is obtained by weighted averaging the waveform of said input audio signal and said predicted waveform, and that has said predicted waveform during intervals other than said first and second overlap intervals.

2. An audio signal correction device according to Claim 1, **characterized in that**, in the weighted averaging of the waveform of said input audio signal and said predicted waveform in said first and second overlap intervals, the weighting given to said predicted waveform becomes greater, the closer to said hiatus interval.

3. An audio signal correction device according to Claim 1 or Claim 2, **characterized in that** said waveform prediction part:

calculates a first amplitude spectrum and a first phase spectrum by performing a Fourier transform upon said first waveform;

calculates a second amplitude spectrum and a second phase spectrum by performing a Fourier transform upon said second waveform;

calculates a third amplitude spectrum which is the average amplitude spectrum of said first amplitude spectrum and said second amplitude spectrum, and a third phase spectrum which is the average phase spectrum of said first phase spectrum and said second phase spectrum; and

calculates said predicted waveform by performing a reverse Fourier transform upon said third amplitude spectrum and said third phase spectrum.

4. An audio signal correction device according to any one of Claims 1 through 3, **characterized in that** said input audio signal is a signal resulting from demodulation of an audio component included in a broadcast wave.

5. An audio signal correction method that is used by an audio signal correction device that comprises a buffer storage part that stores the waveform of an input audio signal over a predetermined time period that is longer than a hiatus interval until the present time point, and that generates a continuous audio output signal by correcting said input audio signal, **characterized by** comprising:

a waveform prediction process of calculating a predicted waveform in a waveform prediction interval on the basis of a first waveform in said buffer storage part during a first interval, which is an interval earlier than said hiatus interval, and on the basis of a second waveform in said buffer storage part during a second interval, which is an interval subsequent to said hiatus interval; and

an audio output signal generation process of generating said audio output signal during said waveform prediction interval, on the basis of said first waveform, said second waveform, and said predicted waveform that has been calculated; and in that:

said waveform prediction interval is an interval that successively includes said hiatus interval, a first overlap interval that overlaps said first interval, and a second overlap interval that overlaps said second interval; and during said waveform prediction interval, said audio output signal is a signal that has a waveform during said first and second overlap intervals that is obtained by weighted averaging the waveform of said input audio signal and said predicted waveform, and that has said predicted waveform during intervals other than said first and second overlap intervals.

6. An audio signal correction program, **characterized by** causing a calculation part to execute an audio signal correction method according to Claim 5.

7. A recording medium, **characterized in that** an audio signal correction program according to Claim 6 is recorded thereupon so as to be readable by a calculation part.

# Fig. 1

EP 2 784 777 A1

# Fig. 2

EP 2 784 777 A1

# Fig. 3

Audio Signal Correction Device

130
Reproduction Processing Unit

DAD

STB

190
Control Unit

DPI

RST

141
Buffer Storage Part

BFL

MOD

142
RAR    BPA, BFD

Waveform Prediction Part

PWI (PWD+FLG)

143
Audio Output Signal Generation Part

BDR

140

AOD

150
Sound Output Unit

# Fig. 4

EP 2 784 777 A1

# Fig. 5

PWI

| FLG | | PWD | | | | | |
|---|---|---|---|---|---|---|---|
| $F_1$ | $F_0$ | $D_{N-1}$ | $D_{N-2}$ | ------------------- | | $D_1$ | $D_0$ |

$$[F_1, F_0] = \begin{cases} [0, 0] & : \text{Normal Interval} \\ [0, 1] & : \text{Leading Overlapping Interval} \\ [1, 0] & : \text{Trailing Overlapping Interval} \\ [1, 1] & : \text{Intermediate Interval} \\ & \quad (\text{The Interval from the End of the Leading} \\ & \quad \text{Overlapping Interval to the Start of the Trailing} \\ & \quad \text{Overlapping Interval}) \end{cases}$$

# Fig. 6

| $[F_1, F_2]$ | [0, 0] | [0, 1] | [1, 1] | [1, 0] | [0, 0] |
|---|---|---|---|---|---|

Weighting

$W_{NF}(T)$

$W_{PR}(T)$

1

$W_{PF}(T)$

$W_{NR}(T)$

0

Time (T)

Normal Interval     Intermediate Interval     Normal Interval

Leading Overlapping Interval     Trailing Overlapping Interval

# Fig. 7

Start

Hiatus Interval Started ? — S11
N
Y

Calculate Leading Audio Waveform Information — S12

Hiatus Interval Ended ? — S13
N
Y

Trailing Audio Interval Ended ? — S14
N
Y

Calculate Trailing Audio Waveform Information — S15

Calculate Average Waveform Information — S16

Calculate Predicted Waveform — S17

# Fig. 8

```
                    ┌──────────────┐
                    │    Start     │
                    └──────────────┘
                           │
                           │        S21
                           ▼
            ┌──────────────────────────┐
            │     New STB Received ?    │──── N
            └──────────────────────────┘
                           │ Y
                           │        S22                              S23
                           ▼                          ┌────────────────────────┐
            ┌──────────────────────────┐              │   Output PWI for Normal │
            │  Is Data MOD Data for A   │──── Y ────▶  │        Interval         │────▶
            │      Normal Interval ?    │              └────────────────────────┘
            └──────────────────────────┘
                           │ N
                           │        S24                              S25
                           ▼                          ┌────────────────────────┐
            ┌──────────────────────────┐              │  Output PWI for Leading │
            │  Is Data MOD Data for A   │──── Y ────▶  │   Overlapping Interval  │────▶
            │  Leading Overlapping      │              └────────────────────────┘
            │      Interval ?           │
            └──────────────────────────┘
                           │ N
                           │        S26                              S27
                           ▼                          ┌────────────────────────┐
            ┌──────────────────────────┐              │     Output PWI for      │
            │  Is Data MOD Data for An  │──── Y ────▶  │  Intermediate Interval  │────▶
            │   Intermediate Interval ? │              └────────────────────────┘
            └──────────────────────────┘
                           │ N                                       S28
                           │                          ┌────────────────────────┐
                           └───────────────────────▶  │  Output PWI for Trailing│
                                                       │   Overlapping Interval  │
                                                       └────────────────────────┘
```

# Fig. 9

```
                        ┌──────────────┐
                        │    Start     │
                        └──────┬───────┘
                               │
          ┌────────────────────┼─────────────────────────────────────────┐
          │                    │                                          │
          │          ┌─────────▼─────────┐  S31                           │
          │         ╱                     ╲    N                          │
          └────────⟨   New BFL Received ?  ⟩────────────────────┘
                    ╲                     ╱
                     └─────────┬─────────┘
                               │ Y
                    ┌──────────▼──────────┐ S32
                    │ MOD and PWI Read In ?│
                    └──────────┬──────────┘
```

- S31  New BFL Received ?   N
- S32  MOD and PWI Read In ?
- S33  Data of Normal Interval ?   Y → S34  Output MOD as AOD
- N
- S35  Data of Leading Overlapping Interval ?   Y → S36  Output Result of Weighted Averaging of Leading Overlapping Interval as AOD
- N
- S37  Data of Intermediate Interval ?   Y → S38  Output PWD as AOD
- N
- S39  Output Result of Weighted Averaging of Trailing Overlapping Interval as AOD

## INTERNATIONAL SEARCH REPORT

| International application No. |
| --- |
| PCT/JP2011/076854 |

### A. CLASSIFICATION OF SUBJECT MATTER
*G10L19/04*(2006.01)i, *H04B1/10*(2006.01)i, *H04B1/16*(2006.01)i

According to International Patent Classification (IPC) or to both national classification and IPC

### B. FIELDS SEARCHED

Minimum documentation searched (classification system followed by classification symbols)
G10L19/04, H04B1/10, H04B1/16

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2008/111158 A1  (Fujitsu Ltd.), 18 September 2008 (18.09.2008), entire text; fig. 1 to 14 & US 2009/0326950 A1 | 1-7 |
| Y | JP 2005-269547 A  (Fujitsu Ten Ltd.), 29 September 2005 (29.09.2005), entire text; fig. 1 to 18 (Family: none) | 1-7 |
| Y | JP 2005-143013 A  (Oki Electric Industry Co., Ltd.), 02 June 2005 (02.06.2005), entire text; fig. 1 to 3 (Family: none) | 1-7 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 December, 2011 (16.12.11) | 27 December, 2011 (27.12.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/076854 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2-023744 A (Oki Electric Industry Co., Ltd.), 05 December 1990 (05.12.1990), entire text; fig. 1 to 2 (Family: none) | 1-7 |

Form PCT/ISA/210 (continuation of second sheet) (July 2009)

**EP 2 784 777 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005269547 A